# EUROPEAN PATENT APPLICATION

(11) **EP 4 850 964 A1**
(43) Date of publication of application: **09.12.2026**
(21) Application number: 26176815.4
(22) Date of filing: 06.05.2026
(51) Int. Cl.: B60L 15/20, B60W 30/18

(54) **CONTROL APPARATUS FOR VEHICLE**

(30) Priority: 05.06.2025 JP 2025094012
(71) Applicant: MAZDA MOTOR CORPORATION, Hiroshima 730-8670 (JP)
(72) Inventor: Tsukamoto, Naoki, Aki-gun, Hiroshima, 730-8670 (JP); Tanaka, Kenji, Aki-gun, Hiroshima, 730-8670 (JP)
(74) Representative: Lorenz Seidler Gossel Part. mbB

(57) **Abstract**

[Problem] To simultaneously reduce electric power consumption and prevent slipping down of a vehicle by limiting generation of creep torque while preventing slipping down caused by a gradient of a road surface.

[Solution] A control apparatus for a vehicle (1) includes: an accelerator pedal sensor (16) that detects an operation amount of an accelerator pedal; a brake pedal sensor (18) that detects a stroke of a brake pedal; a gradient sensor (22) that detects a gradient of a road surface; and an ECU (14) that can control output torque of a motor (2) such that creep torque is generated when the accelerator pedal is not operated. The ECU: acquires a reference value of the creep torque to be generated; causes the motor to output the creep torque at the reference value when a required brake pressure that is calculated on the basis of the stroke of the brake pedal is lower than a predetermined value (B1); and causes the motor to output the creep torque that is lower than the reference value when the required brake pressure is equal to or higher than the predetermined value, and it is set that the predetermined value is increased with an increase in the gradient of the road surface.

## Description

### [Technical Field]

The present invention relates to a control apparatus for a vehicle and, in particular, to a control apparatus for a vehicle that controls creep torque generated by a motor in a vehicle that has a motor as a power source.

### [Background Art]

In a vehicle on which an internal combustion engine and one of an automatic transmission and a semi-automatic transmission are mounted, so-called creep torque is generated with which the vehicle travels forward or rearward without depression of an accelerator pedal in an idling state.

Also, in an electric vehicle or a hybrid vehicle that uses a motor as a power source, control for generating the creep torque by the motor is executed to achieve a similar operation feeling to that of the vehicle on which the internal combustion engine is mounted. However, in order to reduce electric power consumption and increase a travel distance, it is desirable to minimize generation of the wasteful creep torque.

For this reason, the following control apparatus for a vehicle (see Patent Literature 1), vehicle control apparatus (see Patent Literature 2), control apparatus (see Patent Literature 3) and the like are proposed. In the case where the vehicle is in a stopped state and a brake operation is detected, the control apparatus for the vehicle sets the creep torque to 0 when a road surface is flat, or increases the creep torque with an increase in inclination of the road surface. The vehicle control apparatus executes creep cut control in the case where the vehicle is substantially stopped, where a brake pedal is depressed, and a gradient is equal to or less than a predetermined gradient. The control apparatus suppresses the generation of the creep torque in the case where brake hold control is executed, and, in the brake hold control, a braking force is held even when the brake pedal is not operated while the vehicle is stopped.

### [Citation List]

### [Patent Literature]

[Patent Literature 1] Japanese Patent No. 6,198,036
[Patent Literature 2] JP2007-236168A
[Patent Literature 3] Japanese Patent No. 4,127,310

### [Summary of Invention]

### [Technical Problem]

However, in the related art as described in Patent Literatures 1, 2 described above, the control for suppressing the generation of the creep torque is not executed when the road surface is inclined. In addition, the inclination of the road surface is not taken into consideration in the related art as described in Patent Literature 3. Accordingly, in the case where the road is inclined and the braking force is insufficient, the vehicle possibly slips down when the generation of the creep torque is suppressed. Thus, even in the case where the road surface is inclined, there is room for a further reduction in electric power consumption when the creep torque can be reduced while slipping down is prevented.

The invention has been made to solve the above-described problem of the related art, and an object thereof is to provide a vehicle control apparatus capable of simultaneously reducing electric power consumption and preventing slipping down of the vehicle by limiting generation of creep torque while preventing slipping down caused by inclination of a road surface.

### [Solution to Problem]

In order to achieve the above object, the invention is a control apparatus for a vehicle on which a motor is mounted as a power source, and includes: an accelerator pedal sensor that detects an operation amount of an accelerator pedal; a brake pedal sensor that detects a stroke of a brake pedal; a gradient sensor that detects a gradient of a road surface; and a controller that can control output torque of the motor such that creep torque is generated when the accelerator pedal is not operated. The controller: acquires a reference value of the creep torque to be generated; causes the motor to output the creep torque at the reference value when a required brake pressure that is calculated on the basis of the stroke of the brake pedal is lower than a predetermined value; and causes the motor to output the creep torque that is lower than the reference value when the required brake pressure is equal to or higher than the predetermined value. It is set that the predetermined value is increased with an increase in the gradient of the road surface.

In the thus-configured invention, the controller causes the motor to output the creep torque at the reference value without limiting the creep torque when the required brake pressure is lower than the predetermined value, and causes the motor to output the creep torque that is lower than the reference value by limiting the creep torque when the required brake pressure is equal to or higher than the predetermined value. Accordingly, it is possible to prevent slipping down of the vehicle without limiting the creep torque when the braking force is insufficient and to reduce electric power consumption by limiting the creep torque when the braking force is sufficient. In addition, a lower limit value of the required brake pressure at which the creep torque is limited is increased with the increase in the gradient of the road surface. Thus, in the case where the gradient of the road surface is great, the creep torque is not limited unless the braking force is large accordingly. Therefore, it is possible to reliably prevent slipping down of the vehicle 1 caused by limiting the creep torque.

In the invention, preferably, when the required brake pressure is equal to or higher than the predetermined value, the controller calculates creep torque T to be output by the motor by T = Ts × (1 - Gc) with creep cut gain that is equal to or greater than 0 and equal to or less than 1 being set as Gc, the reference value being set as Ts, and the creep torque to be output by the motor being set as T, and it is set that, when the required brake pressure is equal to or higher than the predetermined value, the creep cut gain is increased with an increase in the required brake pressure.

In the thus-configured invention, in the case where the required brake pressure is equal to or higher than the predetermined value, the creep cut gain is increased with the increase in the required brake pressure. Thus, when the braking force is large enough to prevent slipping down, it is possible to further reduce the electric power consumption by limiting the creep torque more greatly as the braking force is increased.

The invention further includes a vehicle speed sensor that detects a vehicle speed of the vehicle. Preferably, in the case where it is determined that the vehicle is stopped on the basis of the vehicle speed, and the required brake pressure is equal to or higher than the predetermined value, the controller causes the motor to output the creep torque that is lower than the reference value.

In the thus-configured invention, the vehicle is not driven by the creep torque, and the creep torque is limited when the braking force is sufficient to prevent slipping down of the vehicle. Thus, it is possible to reduce electric power consumption by limiting the creep torque when there is no problem.

In the invention, preferably, it is set that the reference value becomes a maximum value when the vehicle speed is 0 and that the reference value is reduced with an increase in the vehicle speed.

Preferably wherein a lower limit value of the required brake pressure at which the creep torque is limited is increased with the increase in the gradient of the road surface.

In accordance with a preferred embodiment the creep torque proceesing according to the present invention is started by an ECU when the vehicle is powered on and is repeatedly executed.

Furthermore, the controller may be configured to refer to a creep torque map that defines the relationship between the vehicle speed and the creep torque, and to acquire a reference value of the creep torque that corresponds to the vehicle speed. Preferably, the creep torque map is stored in a memory (28). The controller preferably comprises said memory as well as a processor.

The controller may be configured to output a command value to an inverter so as to cause the motor (2) to output the calculated creep torque.

The controller may be configured so that when no braking force is generated, the creep torque is not limited at all. Preferably, the controller is configured so that the creep torque is not limited at all when the creep cut gain is 0, and the creep torque is limited by 100% when the creep cut gain is 1.

The present invention further relates to a vehicle, wherein the vehicle comprises a control apparatus according to the present invention. Said vehicle may be an electric vehicle or a hybrid vehicle.

In the thus-configured invention, it is possible to generate the appropriate creep torque according to the vehicle speed.

### [Advantageous Effects of Invention]

According to the control apparatus for the vehicle in the invention, it is possible to simultaneously reduce the electric power consumption and prevent slipping down of the vehicle by limiting generation of the creep torque while preventing slipping down caused by the gradient of the road surface.

### [Brief Description of Drawings]

[FIG. 1] FIG. 1 is a plan view illustrating a schematic configuration of a vehicle to which a vehicle control apparatus according to an embodiment of the invention is applied.
[FIG. 2] FIG. 2 is a block diagram illustrating a functional configuration of the vehicle control apparatus according to the embodiment of the invention.
[FIG. 3] FIG. 3 is a flowchart illustrating creep torque control processing according to the embodiment of the invention.
[FIG. 4] FIG. 4 is a view illustrating an example of a creep cut gain map that defines a relationship between a required brake pressure and a creep cut gain corresponding to a gradient of a road surface according to the embodiment of the invention.
[FIG. 5] FIG. 5 is a view illustrating an example of a creep torque map that defines a relationship between a vehicle speed and creep torque according to the embodiment of the invention.

### [Description of Embodiments]

A description will hereinafter be made on a vehicle control apparatus according to an embodiment of the invention with reference to the accompanying drawings.

### <System Configuration>

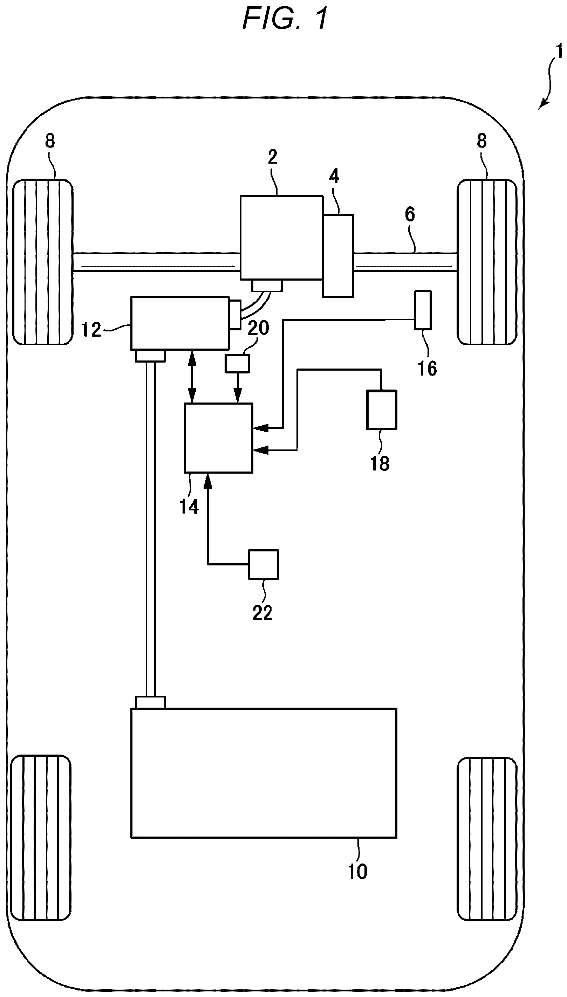

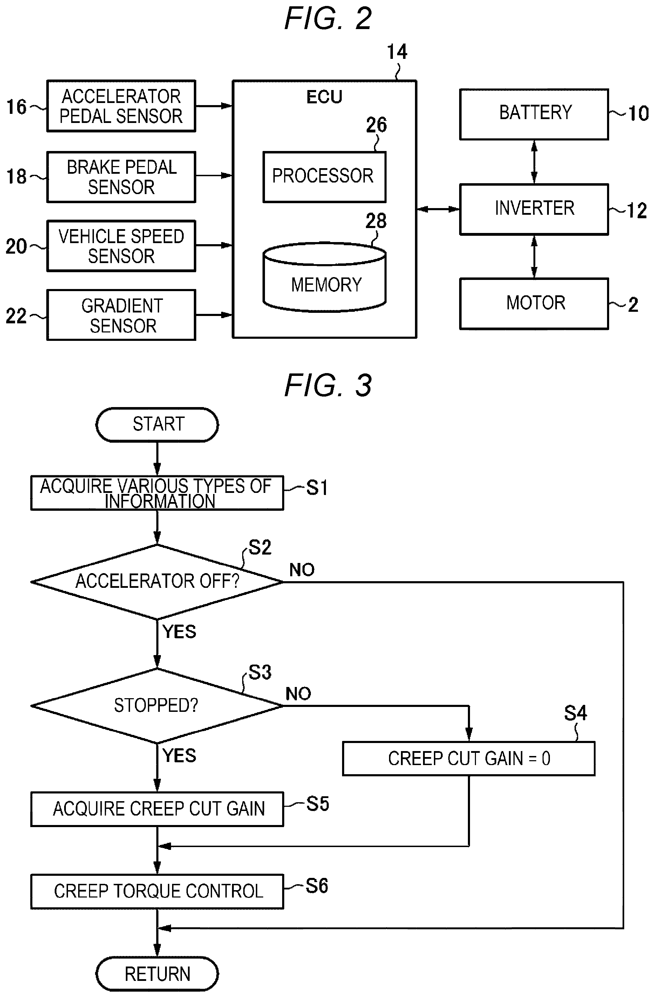

First, a description will be made on a configuration of a vehicle control apparatus according to the present embodiment with reference to FIGs. 1 and 2. FIG. 1 is a plan view illustrating a schematic configuration of a vehicle to which the vehicle control apparatus according to the present embodiment is applied, and FIG. 2 is a block diagram illustrating a functional configuration of the vehicle control apparatus according to this embodiment.

As illustrated in FIG. 1, a vehicle 1 is an electric vehicle (EV) or a hybrid vehicle (HEV) on which a motor 2 is mounted as a power source. The motor 2 is mounted on a body front portion of the vehicle 1, for example. Torque that is output from the motor 2 is transmitted to a speed reducer 4. The speed reducer 4 outputs the output torque of the motor 2 to a pair of driveshafts 6 at a predetermined reduction ratio. In this way, a pair of drive wheels 8 (right and left front wheels in an example illustrated in FIG. 1), each of which is attached to an outer end portion of the respective driveshaft 6 in a vehicle width direction, is driven.

A battery 10 that supplies electric power to the motor 2 is mounted on a body lower portion of the vehicle 1, for example. Furthermore, an inverter 12 is arranged near the motor 2. The inverter 12 converts DC power supplied from the battery 10 into AC power to supply it to the motor 2, and converts regenerative power generated by the motor 2 into the DC power to supply it to the battery 10 and thereby charge the battery 10. The inverter 12 is electrically connected to an Electronic Control Unit (ECU) 14 and can input/output a control signal to/from the ECU 14.

The vehicle 1 further includes: an accelerator pedal sensor 16 that detects an operation amount of an accelerator pedal (corresponding to an amount of the accelerator pedal depressed by a driver), a brake pedal sensor 18 that detects a stroke of the brake pedal (corresponding to an amount of the brake pedal depressed by the driver), a vehicle speed sensor 20 that detects a vehicle speed, and a gradient sensor 22 that detects a gradient of a road surface. The gradient sensor 22 can be formed by using an acceleration sensor, for example. Each of these sensors is electrically connected to the ECU 14 either directly or indirectly, and outputs a detection signal, which corresponds to the respective detection value, to the ECU 14.

In the vehicle 1, the ECU 14 executes various types of control. In the present embodiment, the ECU 14 functions as a controller in the vehicle control apparatus. That is, the ECU 14 is configured to output a command value to the inverter 12 according to an operation of the accelerator pedal or the brake pedal by the driver, the vehicle speed, or the gradient of the road surface, to cause the battery 10 to supply the electric power to the motor 2 or cause the motor 2 to supply the regenerative power to the battery 10 via this inverter 12, and to thereby control desired output torque or regenerative torque corresponding to the driver's operation and creep torque at the time when the accelerator pedal is released.

As illustrated in FIG. 2, the ECU 14 includes: a processor 26; and memory 28 (ROM, RAM, or the like) for storing various programs (including a basic control program such as an OS and an application program that is activated on the OS to implement a particular function), each of which is interpretively executed on the processor 26, and various pieces of data.

### <Control Processing>

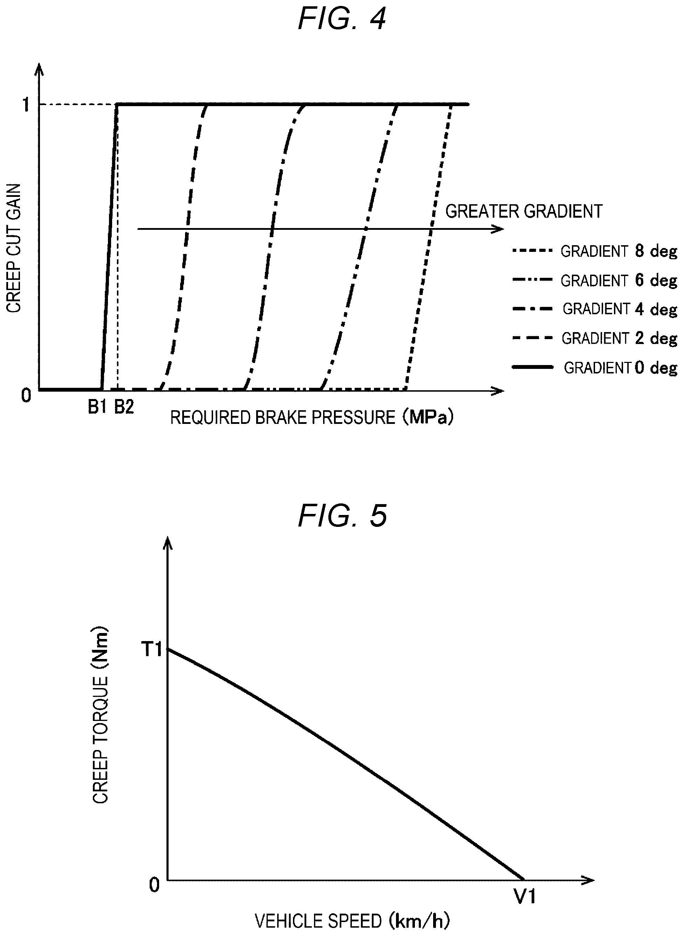

Next, a description will be made on creep torque control processing according to the present embodiment with reference to FIGs. 3 to 5. FIG. 3 is a flowchart illustrating the creep torque control processing according to the present embodiment, FIG. 4 is a view illustrating an example of a creep cut gain map that defines a relationship between a required brake pressure and a creep cut gain corresponding to a gradient of a road surface, and FIG. 5 is a view illustrating an example of a creep torque map that defines a relationship between the vehicle speed and the creep torque.

The creep torque control processing illustrated in FIG. 3 is started by the ECU 14 when the vehicle 1 is powered on, and is repeatedly executed in a predetermined cycle.

First, in step S1, the ECU 14 acquires the accelerator pedal operation amount detected by the accelerator pedal sensor 16, a stroke of the brake pedal detected by the brake pedal sensor 18, the vehicle speed detected by the vehicle speed sensor 20, and the gradient of the road surface detected by the gradient sensor 22.

Next, in step S2, the ECU 14 determines whether the accelerator is OFF (the accelerator pedal is not operated) on the basis of the accelerator pedal operation amount that is acquired in step S1. In the present embodiment, it is determined that the accelerator is OFF when the accelerator pedal operation amount is 0.

If the accelerator is not OFF as a result of the determination in step S2 (step S2: NO), it is not in a situation where the creep torque is controlled but in a situation where the output torque of the motor 2 is controlled according to the accelerator pedal operation amount. Thus, the ECU 14 terminates the creep torque control processing.

On the other hand, if the accelerator is OFF (step S2: YES), the processing proceeds to step S3, and the ECU 14 determines whether the vehicle 1 is stopped on the basis of the vehicle speed that is acquired in step S1. In the present embodiment, in the case where a state where the vehicle speed is 1 km/h or less continues for a predetermined time (for example, 1 second), it is determined that the vehicle 1 is stopped.

If the vehicle 1 is not stopped as a result of the determination in step S3 (step S3: NO), the processing proceeds to step S4, and the ECU 14 sets the creep cut gain to 0. Here, the creep cut gain in the present embodiment is a numerical value that indicates a degree to limit the creep torque to be output by the motor 2. The creep torque is not limited at all when the creep cut gain is 0, and the creep torque is limited by 100% when the creep cut gain is 1 (that is, the creep torque becomes 0). In the present embodiment, an initial value of the creep cut gain is set to 0.

On the other hand, if the vehicle is stopped (step S3: YES), the process proceeds to step S5, and the ECU 14 acquires the creep cut gain on the basis of the stroke of the brake pedal and the gradient of the road surface that are acquired in step S1. In the present embodiment, the ECU 14 refers to the creep cut gain map (the example thereof is illustrated in FIG. 4) that defines a relationship between a combination of the gradient of the road surface and the required brake pressure and the creep cut gain, and acquires the creep cut gain that corresponds to the stroke of the brake pedal and the gradient of the road surface that are acquired in step S1. The creep cut gain map is stored in advance in the memory 28. The required brake pressure can be calculated on the basis of the stroke of the brake pedal.

In the map exemplified in FIG. 4, a horizontal axis represents the required brake pressure, and a vertical axis represents the creep cut gain. As illustrated in FIG. 4, in the case where the required brake pressure is 0 MPa, the creep cut gain is 0. That is, when no braking force is generated, the creep torque is not limited at all. When the required brake pressure becomes equal to or higher than a predetermined brake pressure (B1 when the road surface gradient = 0 deg in the example illustrated in FIG. 4), the creep cut gain is increased with an increase in the required brake pressure. Then, the creep cut gain becomes 1 at a predetermined brake pressure (B2 when the road surface gradient = 0 deg in the example illustrated FIG. 4). In addition, the required brake pressure at the time when the creep cut gain becomes greater than 0 is increased with the increase in the gradient. That is, with the increase in the gradient of the road surface, a lower limit value of the required brake pressure at which the creep torque is limited is increased. Accordingly, in the case where the gradient of the road surface is great, the creep torque is not limited unless the braking force is correspondingly large. Thus, it is possible to prevent slipping down of the vehicle 1 caused by limiting the creep torque.

After step S4 or S5, in step S6, the ECU 14 controls the creep torque on the basis of the vehicle speed acquired in step S1 and the creep cut gain determined in step S4 or S5.

In the present embodiment, the ECU 14 refers to the creep torque map (the example is illustrated in FIG. 5) that defines the relationship between the vehicle speed and the creep torque, and acquires a reference value of the creep torque that corresponds to the vehicle speed acquired in step S1. The creep torque map is stored in advance in the memory 28. As illustrated in FIG. 5, the reference value of the creep torque is defined to become a maximum value T1 at the time when the vehicle speed is 0 km/h and to become 0 at the time when the vehicle speed is a predetermined vehicle speed V1.

The ECU 14 calculates creep torque T to be output by the motor 2 as T = Ts × (1 - Gc) with the reference value of the creep torque acquired from the creep torque map being set as Ts and the creep cut gain determined in step S4 or S5 being set as Gc. That is, in the case where the creep cut gain Gc is greater than 0, the creep torque T to be output by the motor 2 is lower than the reference value Ts. Then, the ECU 14 outputs a command value to the inverter 12 so as to cause the motor 2 to output the calculated creep torque T. After step S6, the ECU 14 terminates the creep torque control processing.

### <Operational Effects>

Next, a description will be made on operational effects of the control apparatus for the vehicle according to the above-described embodiment.

First, the ECU 14 causes the motor 2 to output the creep torque at the reference value without limiting the creep torque when the required brake pressure is lower than the predetermined value, and causes the motor 2 to output the creep torque that is lower than the reference value by limiting the creep torque when the required brake pressure is equal to or higher than the predetermined value. Accordingly, it is possible to prevent slipping down of the vehicle 1 without limiting the creep torque when the braking force is insufficient and to reduce electric power consumption by limiting the creep torque when the braking force is sufficient. In addition, the lower limit value of the required brake pressure at which the creep torque is limited is increased with the increase in the gradient of the road surface. Thus, in the case where the gradient of the road surface is great, the creep torque is not limited unless the braking force is large accordingly. Therefore, it is possible to reliably prevent slipping down of the vehicle 1 caused by limiting the creep torque.

In the case where the required brake pressure is equal to or higher than the predetermined value, the creep cut gain is increased with the increase in the required brake pressure. Thus, when the braking force is large enough to prevent slipping down, it is possible to further reduce the electric power consumption by limiting the creep torque more greatly as the braking force is increased.

The creep torque is limited when the vehicle 1 is not driven by the creep torque and the braking force is sufficient to prevent slipping down of the vehicle 1. Thus, it is possible to reduce the electric power consumption by limiting the creep torque when there is no problem.

The reference value of the creep torque is set to be the maximum value when the vehicle speed is 0, and the reference value is set to be reduced with the increase in the vehicle speed. Thus, it is possible to generate the appropriate creep torque according to the vehicle speed.

### [Reference Signs List]

1: vehicle
2: motor
4: speed reducer
6: driveshaft
8: drive wheel
10: battery
12: inverter
14: ECU
16: accelerator pedal sensor
18: brake pedal sensor
20: vehicle speed sensor
22: gradient sensor
26: processor
28: memory

## Claims

1. A control apparatus for a vehicle (1) on which a motor (2) is mounted as a power source, the control apparatus comprising:
an accelerator pedal sensor (16) that detects an operation amount of an accelerator pedal;
a brake pedal sensor (18) that detects a stroke of a brake pedal;
a gradient sensor (22) that detects a gradient of a road surface; and
a controller (14) that can control output torque of the motor (2) such that creep torque is generated when the accelerator pedal is not operated, wherein
the controller (14):
acquires a reference value of the creep torque to be generated;
causes the motor (2) to output the creep torque at the reference value when a required brake pressure that is calculated on the basis of the stroke of the brake pedal is lower than a predetermined value; and
causes the motor (2) to output the creep torque that is lower than the reference value when the required brake pressure is equal to or higher than the predetermined value, and
it is set that the predetermined value is increased with an increase in the gradient of the road surface.

2. The control apparatus for the vehicle (1) according to claim 1, wherein
when the required brake pressure is equal to or higher than the predetermined value, the controller (14) calculates creep torque T to be output by the motor by T = Ts × (1 - Gc) with creep cut gain that is equal to or greater than 0 and equal to or less than 1 being set as Gc, the reference value being set as Ts, and the creep torque to be output by the motor (2) being set as T, and
it is set that, when the required brake pressure is equal to or higher than the predetermined value, the creep cut gain is increased with an increase in the required brake pressure.

3. The control apparatus for the vehicle (1) according to claim 2, wherein the control apparatus is configured so that when the braking force is large enough to prevent slipping down, to further reduce the electric power consumption by limiting the creep torque more greatly as the braking force is increased.

4. The control apparatus for the vehicle (1) according to claim 1 or 2 further comprising:
a vehicle speed sensor (20) that detects a vehicle speed of the vehicle (1), wherein
in the case where it is determined that the vehicle (1) is stopped on the basis of the vehicle speed, and the required brake pressure is equal to or higher than the predetermined value, the controller (14) causes the motor (2) to output the creep torque that is lower than the reference value.

5. The control apparatus for the vehicle (1) according to claim 3, wherein
it is set that the reference value becomes a maximum value when the vehicle speed is 0 and that the reference value is reduced with an increase in the vehicle speed.

6. The control apparatus for the vehicle (1) according to any one of the preceding claims, wherein a lower limit value of the required brake pressure at which the creep torque is limited is increased with the increase in the gradient of the road surface.

7. The control apparatus for the vehicle (1) according to any one of the preceding claims, wherein the creep torque proceesing is started by an ECU (14) when the vehicle (1) is powered on and is repeatedly executed.

8. The control apparatus for the vehicle (1) according to any one of the preceding claims, wherein the controller (14) is configured to refer to a creep torque map that defines the relationship between the vehicle speed and the creep torque, and to acquire a reference value of the creep torque that corresponds to the vehicle speed.

9. The control apparatus for the vehicle (1) according to claim 8, wherein the creep torque map is stored in a memory (28).

10. The control apparatus for the vehicle (1) according to claim 9, wherein the controller (14) comprises said memory (28) as well a processor (26).

11. The control apparatus for the vehicle (1) according to any one of the preceding claims, wherein the controller (14) is configured to output a command value to an inverter (12) so as to cause the motor (2) to output the calculated creep torque.

12. The control apparatus for the vehicle (1) according to any one of the preceding claims, wherein the controller (14) is configured that when no braking force is generated, the creep torque is not limited at all.

13. The control apparatus for the vehicle (1) according to any one of the preceding claims, wherein the controller (14) is configured so that the creep torque is not limited at all when the creep cut gain is 0, and the creep torque is limited by 100% when the creep cut gain is 1:

14. A vehicle (1), wherein the vehicle (1) comprises a control apparatus according to any one of claims 1 to 13.

15. A vehicle (1) according to claim 14, wherein the vehicle is an electric vehicle (EV) or a hybrid vehicle (HEV).
